# EUROPEAN PATENT SPECIFICATION

(11) **EP 1 676 619 B1**
(45) Date of publication and mention of the grant of the patent: **03.08.2011**
(21) Application number: 04425965.3
(22) Date of filing: 31.12.2004
(51) Int. Cl.: B01D 39/20, C04B 38/06, C04B 38/08

(54) **A process for producing a filter for the abatement of emissions of particulate matter**
Herstellung eines Filterelements zur Beseitigung von Feststoffpartikelemissionen
Procédé de production d'un élément filtrant servant à reduire des émissions de matière particulaire

(43) Date of publication of application: 05.07.2006
(73) Proprietor: C.R.F. Società Consortile per Azioni, 10043 Orbassano (Torino) (IT)
(72) Inventor: Merlone Borla, Edoardo, 10043 Orbassano (IT); Faraldi, Paolo, 10043 Orbassano (IT); Pidria, Marco Federico, 10043 Orbassano (IT); Corrias, Silvio, 10043 Orbassano (IT)
(74) Representative: Jorio, Paolo

(56) References cited:
- EP-A- 1 197 253
- WO-A-00/29353
- DE-A1- 1 771 526
- US-A1- 2004 261 384

## Description

The present invention relates to a process for producing a filter for the abatement of emissions of particulate matter, in particular for use in diesel-engine exhaust systems.

Various solutions are generally adopted for limiting the emissions of fine particles by internal-combustion engines. Said particles, produced by incomplete combustion of the fuel, have generally micrometric dimensions, with a distribution centred around 10 µm. In the text, reference will be made to said powders using the term "particulate matter", in particular as regards the emissions of diesel engines.

It is known to use a filter as part of the system for posttreatment of exhaust gases particularly in diesel engines, for withholding the particulate matter.

Said filters may be distinguished in two categories: wall-flow honeycomb filters (illustrated, for example, in the patent No. US4329162), which are currently the most widespread; and in-depth filtering devices made of porous cellular material. Generally, there is envisaged the possibility of coating the filter with an appropriate catalyst.

A method for the production of such filters is described in the patent No. US 4540535. The main disadvantages of the filters produced with said process are the low resistance to thermal variations and to mechanical stresses as well as the incompatibility with some types of catalysts.

The patent No. WO 00/69542 describes an alternative method for the production of ceramic-based filters using a polyurethane sponge. However, said process is difficult to implement at an industrial scale, on account of the problems involved in controlling the step of impregnation of the polyurethane foam, which results in a high variability in the size and distribution of the pores and consequently in a variable permeability. Another limiting factor linked to the step of impregnation is the maximum thickness of the polyurethane foams that can be used, which cannot exceed 30-40 mm. The filters that can be obtained are moreover linked to the availability of polymeric foams with the desired shape and porosity. Further methods for producing ceramic-based filters are disclosed in EP 1197253 and US 2004/261384.

The purpose of the present invention is consequently to identify a process whereby it is possible to produce ceramic-based filters for the abatement of emissions of particulate matter, which will have pre-set characteristics of porosity and permeability and will be economically advantageous and will not present the disadvantages described above.

According to the present invention, said purpose is achieved by a process for producing a filter for the abatement of emissions of particulate matter according to Claim 1 and by the corresponding filter according to Claim 24.

The process of production of a filter for particulate matter initially entails the step of preparing a suspension comprising a ceramic material in powder form, water, and appropriate additives.

The ceramic material is preferably selected in the group consisting of zirconium oxide, aluminium oxide, mullite (3Al₂O₃-2SiO₂), cordierite (Mg₂Al₄Si₅O₁₈), silicon nitride, silicon carbide, and mixtures thereof.

More preferably, the ceramic material is zirconium oxide or aluminium oxide.

Preferably, amongst the additives at least one dispersing agent and at least one binding agent are used.

Preferably, the dispersing agent is an ammonium salt, more preferably tetramethylammonium hydroxide or, alternatively, a dispersing agent comprising a polyacrylate, more preferably ammonium polymethacrylate.

The binder is preferably selected in the group consisting of polyethylene oxide, methylcellulose, carboxymethylcellulose, polyethylene glycol, polyvinyl alcohol, dextran, and, more preferably, polyethylene oxide.

The binder advantageously bestows on the "green" ceramic structure, i.e., the ceramic structure dried but not sintered, of the filter a mechanical resistance compatible with the manipulations necessary for the steps of pyrolysis and sintering of the piece.

The suspension comprises:
- from 60 wt% to 90 wt% of at least one ceramic material;
- from 0.5 wt% to 2 wt% of at least one dispersing agent;
- from 1 wt% to 4 wt% of at least one binder; and
- from 10 wt% to 40 wt% of water.

Preferably, a suspension is prepared, comprising:
- between 70 wt% and 82 wt% of zirconium oxide;
- between 0.8 wt% and 1.5 wt% of Dolapix;
- between 1 wt% and 4 wt% of polyethylene oxide; and
- between 15 wt% and 22 wt% of water.

Alternatively, a suspension is prepared, comprising:
- between 68 wt% and 80 wt% of aluminium oxide;
- between 0.8 wt% and 1.5 wt% of Dolapix;
- between 1.5 wt% and 3.50 wt% of polyethylene oxide; and
- between 12 wt% and 28 wt% of water.

Alternatively, a suspension is prepared, comprising:
- between 68 wt% and 80 wt% of mullite;
- between 0.8 wt% and 1.5 wt% of Dolapix;
- between 1.5 wt% and 3.50 wt% of polyethylene oxide; and
- between 12 wt% and 28 wt% of water.

The amount of water used enables a suspension with appropriate viscosity to be obtained for the purpose of enabling evacuation of the air bubbles so as to prevent formation of empty spaces during the drying step.

Following upon the step of preparation of the suspension, polymeric granules are dipped in the suspension itself so as to form a mixture.
Said polymeric granules comprise a polymer foam, i.e., a polymer treated in such a way that the granules will develop a high degree of porosity.

Preferably, the polymer foam is selected in the group consisting of polystyrene, polymethylmethacrylate, polyvinyl chloride, polyurethane, and, more preferably, polystyrene; the polymeric material chosen must present, in the expanded state, mechanical properties such as to enable control of the final size of the cells of the filter.

Preferably the mixture comprises:
- from 1 wt% to 10 wt% of polymeric granules; and
- from 90 wt% to 99 wt% of suspension of ceramic material.

More preferably, it comprises:
- 2 wt% of polymeric granules;
- 98 wt% of suspension of ceramic material.

Preferably, the polymeric granules have a substantially spheroidal shape with an equivalent diameter of between 200 µm and 1000 µm. Said diameter is chosen in relation to the final size of the cells of the filter that it is desired to obtain.

According to a preferred embodiment of the invention, granules of polystyrene foam are used having a density of between 10 g/l and 30 g/l, more preferably, having a density of 15 g/l.

The granules are added in amounts such as to reach an appropriate value of Degree of Pore Saturation (DPS). Said value is approximately 1, in such a way that the surface tension of the suspension will set the polymeric granules in contact with one another and at the same time will prevent formation of empty spaces between the granules.

Next, the mixture thus formed is rendered homogeneous and is then poured into a form, for example a mould, having the desired dimensions.

At this point, the mixture is subjected to the drying step, which lasts from 2 to 48 hours, during which a pressure is also exerted. Said pressure must lead to a deformation due to compression of between 25% and 35% of the initial height reached by the mixture in the mould, so as to eliminate the excess suspension present. Said pressure further guarantees that interconnection pores will be obtained between the primary cells during the subsequent step of pyrolysis as a result of deformation of the polymeric granules in the points of contact.

After said drying process, the mixture is then subjected to a thermal cycle, which first enables a step of pyrolysis of the polymeric granules and then enables a step of sintering of the ceramic material.

In this way, as the polymeric granules undergo a thermal decomposition, they leave cavities within the structure of the ceramic material, which give rise to primary cells having the shape of the starting granules. Furthermore, at the area of contact between the polymeric granules previously subjected to compression, the interconnection pores are formed between the primary cells, said pores bestowing upon the material the characteristics of permeability and filtering capacity. The percentage of compression applied can thus be used as a parameter for calibrating the final characteristics of the filtering material.

Preferably, the filter for the abatement of the emissions of particulate matter thus obtained is provided with primary cells of dimensions of between 200 µm and 1000 µm and interconnection pores of dimensions of between 2 µm and 50 µm.
In this way, after the step of sintering, the ceramic material assumes a characteristic spongy appearance.

Further characteristics of the present invention will emerge from the ensuing description of a non-limiting example, provided merely by way of illustration.

### Example 1

A suspension of zirconium-oxide powder partially stabilized with yttrium oxide (approximately 3 mol%) was prepared. The characteristics of the powder chosen are listed in the Table 1 below.

**Table 1**

| Characteristics of the powder | |
|---|---|
| Y₂O₃ (mol%) | 3 |
| Specific surface area (m²/g) | 7±2 |
| Binder (wt%) | 3 |
| Appearance | Granular |

| Typical properties of the sintered bodies | |
|---|---|
| Density (g/cm³) | 6.05 |
| Bending strength at R.T. (MPa) | 1200 |
| Hardness (Hv10) | 1250 |

1 g of Dolapix and 2 g of polyethylene oxide were added to 35 g of water with pH 10. Next, 100 g of zirconium-oxide powder were added under stirring until a homogeneous suspension was obtained. To obtain an optimal homogenization of the suspension, this was subjected to a process of grinding/mixing in a ball mill for 24 hours.

Once the suspension was prepared and homogenized, there were added 1.5 g of granules of polystyrene foam with a density of 15 g/1 and an equivalent mean diameter of between 200 µm and 1000 µm, to form a homogeneous mixture.

Then, the mixture was poured into appropriate forms, for example moulds, having the desired shape.

Once the mixture was poured into the moulds, the drying process started and lasted 48 hours, during which the mixture was subjected to a pressure with the use of an appropriate press.

In order to facilitate the process of extraction of the dried material from the moulds, the latter may be made of Teflon. In addition, on the bottom of the moulds there was provided an evacuation system in order to eliminate the excess suspension which comes out of the mould when the pressure is applied.

Once the dried material was extracted from the mould, it was subjected to the step of pyrolysis and then to the step of sintering.

Initially, the mixture was heated slowly up to 600°C, so as to promote pyrolysis of the polymeric granules and formation of the cells. Next, the mixture was heated rapidly up to 1600°C and kept at said temperature for three hours, so promoting sintering of the ceramic material. Finally, the filter thus obtained was cooled slowly down to room temperature.

## Claims

1. A process for producing a filter for the abatement of the emissions of particulate matter, comprising the steps of
- preparing a ceramic-based suspension comprising:
- from 60 wt% to 90 wt% of at least one ceramic material;
- from 0.5 wt% to 2 wt% of at least one dispersing agent;
- from 1 wt% to 4 wt% of at least one binding agent; and
- from 10 wt% to 40 wt% of water,
- dipping polymeric granules in said suspension so as to form a mixture; and
- pouring said mixture into a mould.

2. The process according to Claim 1, **characterized in that**, after said step of pouring into a mould, there are carried out steps of drying, pyrolysing, and sintering so as to form said filter.

3. The process according to Claim 2, **characterized in that**, during said step of drying, said mixture is subjected to compression.

4. The process according to any one of the preceding claims, **characterized in that** said suspension comprises at least one dispersing agent.

5. The process according to any one of the preceding claims, **characterized in that** said suspension comprises at least one binding agent.

6. The process according to any one of the preceding claims, **characterized in that** said ceramic material is selected from the group consisting of zirconium oxide, aluminium oxide, mullite, cordierite, silicon nitride, silicon carbide, and mixtures thereof.

7. The process according to Claim 6, **characterized in that** said ceramic material is zirconium oxide.

8. The process according to Claim 6, **characterized in that** said ceramic material is aluminium oxide.

9. The process according to Claim 4, **characterized in that** said dispersing agent is an ammonium salt.

10. The process according to Claim 9, **characterized in that** said dispersing agent is tetramethylammonium hydroxide.

11. The process according to Claim 9, **characterized in that** said dispersing agent comprises a polyacrylate.

12. The process according to Claim 11, **characterized in that** said polyacrylate is ammonium polymethacrylate.

13. The process according to Claim 5, **characterized in that** said binding agent is selected in the group consisting of polyethylene oxide, methylcellulose, carboxymothylcellulose, polyethylene glycol, polyvinyl alcohol, and dextran.

14. The process according to Claim 13, **characterized in that** said binding agent is polyethylene oxide.

15. The process according to any one of the preceding claims, **characterized in that** said polymeric granules have a spheroidal shape.

16. The process according to Claim 15 **characterized in that** said polymeric granules have an equivalent diameter of between 200 µm and 1000 µm.

17. The process according to either Claim 15 or Claim 16. **characterized in that** said polymeric granules comprise a polymer foam.

18. The process according to Claim 17 **characterized in that** said polymer foam is chosen in the group consisting of polystyrene, polymethylmethacrylate, polyvinyl chloride, and polyurethane.

19. The process according to Claim 18 **characterized in that** said polymer foam is polystyrene.

20. The process according to claim 19 **characterized in that** said polystyrene has a density of between 10 g/l and 30 g/l.

21. The process according to Claim 20, **characterized in that** said polystyrene has a density of 15 g/l.

22. The process according to any one of the preceding claims, **characterized in that** said mixture comprises:
- from 1 wt% to 10 wt% of said polymeric granules; and
- from 90 wt% to 99 wt% of said suspension of ceramic material.

23. The process according to Claim 22, **characterized in that** said mixture comprises:
- 2 wt% of said polymeric granules; and
- 98 wt% of said suspension of ceramic material.

24. A filter for withholding particulate matter produced by means of the process according to any one of the preceding claims.

25. The filter according to Claim 24, **characterized in that** it is provided with primary cells of dimensions of between 200 µm and 1000 µm and interconnection pores of dimensions of between 2 µm and 50 µm.

## Patentansprüche

1. Verfahren zur Herstellung eines Filters zur Beseitigung von Partikelmaterialien aus Abgasen, umfassend die Schritte:
- Herstellen einer keramikbasierten Suspension, umfassend:
- von 60 Gew.-% bis 90 Gew.-% von zumindest einem Keramikmaterial;
- von 0,5 Gew.-% bis 2 Gew.-% von zumindest einem Dispersionsmittel;
- von 1 Gew.-% bis 4 Gew.-% von zumindest einem Bindemittel; und
- von 10 Gew.-% bis 40 Gew.-% an Wasser,
- Eintauchen von Polymergranulat in die Suspension um eine Mischung zu bilden; und
- Gießen der Mischung in eine Form.

2. Verfahren nach Anspruch 1, **dadurch gekennzeichnet, dass** nach dem Schritt des Gießens in eine Form Schritte ausgeführt werden des Trocknens, Pyrolisierens und Sinterns, um den Filter zu bilden.

3. Verfahren nach Anspruch 2, **dadurch gekennzeichnet, dass** während dem Schritt des Trocknens die Mischung einer Kompression unterliegt.

4. Verfahren nach einem der vorangegangenen Ansprüche, **dadurch gekennzeichnet, dass** die Suspension zumindest ein Dispersionsmittel enthält.

5. Verfahren nach einem der vorangegangenen Ansprüche, **dadurch gekennzeichnet, dass** die Suspension zumindest ein Bindemittel umfasst.

6. Verfahren nach einem der vorangegangenen Ansprüche, **dadurch gekennzeichnet, dass** das Keramikmaterial ausgewählt ist aus der Gruppe, gebildet aus Zirkonoxid, Aluminiumoxid, Mullit, Cordierit, Siliziumnitrit, Siliziumcarbid und Mischungen davon.

7. Verfahren nach Anspruch 6, **dadurch gekennzeichnet, dass** das Keramikmaterial Zirkonoxid ist.

8. Verfahren nach Anspruch 6, **dadurch gekennzeichnet, dass** das Keramikmaterial Aluminiumoxid ist.

9. Verfahren nach Anspruch 4, **dadurch gekennzeichnet, dass** das Dispersionsmittel ein Ammoniumsalz ist.

10. Verfahren nach Anspruch 9, **dadurch gekennzeichnet, dass** das Dispersionsmittel Tetramethylammoniumhydroxid ist.

11. Verfahren nach Anspruch 9, **dadurch gekennzeichnet, dass** das Dispersionsmittel ein Polyacrylat umfasst.

12. Verfahren nach Anspruch 11, **dadurch gekennzeichnet, dass** das Polyacrylat Ammoniumpolymethacrylat ist.

13. Verfahren nach Anspruch 5, **dadurch gekennzeichnet, dass** das Bindemittel ausgewählt ist aus der Gruppe, gebildet aus Polyethylenoxid, Methylcellulose, Carboxymethylcellulose, Polyethylenglycol, Polyvinylalkohol und Dextran.

14. Verfahren nach Anspruch 13, **dadurch gekennzeichnet, dass** das Bindemittel Polyethylenoxid ist.

15. Verfahren nach einem der vorangegangenen Ansprüche, **dadurch gekennzeichnet, dass** das Polymergranulat eine kugelige Form hat.

16. Verfahren nach Anspruch 15, **dadurch gekennzeichnet, dass** das Polymergranulat einen Äquivalentdurchmesser aufweist von zwischen 200 µm und 1000 µm.

17. Verfahren nach einem der Ansprüche 15 oder 16, **dadurch gekennzeichnet, dass** das Polymergranulat einen Polymerschaum umfasst.

18. Verfahren nach Anspruch 17, **dadurch gekennzeichnet, dass** der Polymerschaum ausgewählt ist unter der Gruppe, gebildet aus Polystyren, Polymethylmethacrylat, Polyvinylchlorid und Polyurethan.

19. Verfahren nach Anspruch 18, **dadurch gekennzeichnet, dass** der Polymerschaum Polystyren ist.

20. Verfahren nach Anspruch 19, **dadurch gekennzeichnet, dass** das Polystyren eine Dichte hat von zwischen 10 g/l und 30 g/l.

21. Verfahren nach Anspruch 20, **dadurch gekennzeichnet, dass** das Polystyren eine Dichte hat von 15 g/l.

22. Verfahren nach einem der vorangegangenen Ansprüche, **dadurch gekennzeichnet, dass** die Mischung umfasst:
- von 1 Gew.-% bis 10 Gew.-% des Polymergranulats; und
- von 90 Gew.-% bis 99 Gew.-% der Suspension an Keramikmaterial oder Lösung an Keramikmaterial beziehungsweise an Keramikmaterialsuspension oder -lösung.

23. Verfahren nach Anspruch 22, **dadurch gekennzeichnet, dass** die Mischung umfasst:
- 2 Gew.-% an Polymergranulat; und
- 98 Gew.-% an Keramikmaterialsuspension.

24. Filter zum Zurückhalten von Partikelmaterialien, erzeugt durch ein Verfahren gemäß einem der vorangegangenen Ansprüche.

25. Filter nach Anspruch 24, **dadurch gekennzeichnet, dass** er bereitgestellt ist mit Primärzellen von Abmessungen zwischen 200 µm und 1000 µm und verbindenden Poren von Abmessungen von zwischen 2 µm und 50 µm.

## Revendications

1. Procédé de production d'un filtre pour réduire les émissions de matière particulaire, comprenant les étapes consistant
- à préparer une suspension à base de céramique, comprenant :
- de 60 % en poids à 90 % en poids d' au moins un matériau céramique ;
- de 0,5 % en poids à 2 % en poids d'au moins un agent dispersant ;
- de 1 % en poids à 4 % en poids d'au moins un agent liant ; et
- de 10 % en poids à 40 % en poids d'eau,
- à immerger les granules polymères dans ladite suspension de façon à former un mélange ; et
- à verser ledit mélange dans un moule.

2. Procédé selon la revendication 1, **caractérisé en ce que**, après ladite étape consistant à verser dans un moule, l'on effectue des étapes de séchage, de pyrolyse et de frittage de façon à former ledit filtre.

3. Procédé selon la revendication 2, **caractérisé en ce que**, pendant ladite étape de séchage, ledit mélange est soumis à une compression.

4. Procédé selon l'une quelconque des revendications précédentes, **caractérisé en ce que** ladite suspension comprend au moins un agent dispersant.

5. Procédé selon l'une quelconque des revendications précédentes, **caractérisé en ce que** ladite suspension comprend au moins un agent liant.

6. Procédé selon l'une quelconque des revendications précédentes, **caractérisé en ce que** ledit matériau céramique est choisi dans le groupe constitué par l'oxyde de zirconium, l'oxyde d'aluminium, la mullite, la cordiérite, le nitrure de silicium, le carbure de silicium et des mélanges de ceux-ci.

7. Procédé selon la revendication 6, **caractérisé en ce que** ledit matériau céramique est l'oxyde de zirconium.

8. Procédé selon la revendication 6, **caractérisé en ce que** ledit matériau céramique est l'oxyde d'aluminium.

9. Procédé selon la revendication 4, **caractérisé en ce que** ledit agent dispersant est un sel d'ammonium.

10. Procédé selon la revendication 9, **caractérisé en ce que** ledit agent dispersant est l'hydroxyde de tétraméthylammonium.

11. Procédé selon la revendication 9, **caractérisé en ce que** ledit agent dispersant comprend un polyacrylate.

12. Procédé selon la revendication 11, **caractérisé en ce que** ledit polyacrylate est un polyméthacrylate d'ammonium.

13. Procédé selon la revendication 5, **caractérisé en ce que** ledit agent liant est choisi dans le groupe constitué par un oxyde de polyéthylène, une méthylcellulose, une carboxyméthylcellulose, un polyéthylèneglycol, un alcool polyvinylique et un dextran.

14. Procédé selon la revendication 13, **caractérisé en ce que** ledit agent liant est un oxyde de polyéthylène.

15. Procédé selon l'une quelconque des revendications précédentes, **caractérisé en ce que** lesdits granules polymères ont une forme sphéroïdale.

16. Procédé selon la revendication 15, **caractérisé en ce que** lesdits granules polymères ont un diamètre équivalent compris entre 200 µm et 1000 µm.

17. Procédé selon soit la revendication 15 soit la revendication 16, **caractérisé en ce que** lesdits granules polymères comprennent une mousse polymère.

18. Procédé selon la revendication 17, **caractérisé en ce que** ladite mousse polymère est choisie dans le groupe constitué par un polystyrène, un polyméthacrylate de méthyle, un polychlorure de vinyle et un polyuréthanne.

19. Procédé selon la revendication 18, **caractérisé en ce que** ladite mousse polymère est un polystyrène.

20. Procédé selon la revendication 19, **caractérisé en ce que** ledit polystyrène a une masse volumique comprise entre 10 g/l et 30 g/l.

21. Procédé selon la revendication 20, **caractérisé en ce que** ledit polystyrène a une masse volumique de 15 g/l.

22. Procédé selon l'une quelconque des revendications précédentes, **caractérisé en ce que** ledit mélange comprend :
- de 1 % en poids à 10 % en poids desdits granules polymères ; et
- de 90 % en poids à 99 % en poids de ladite suspension de matériau céramique.

23. Procédé selon la revendication 22, **caractérisé en ce que** ledit mélange comprend :
- 2 % en poids desdits granules polymères ; et
- 98 % en poids de ladite suspension de matériau céramique.

24. Filtre pour retenir une matière particulaire produite au moyen du procédé selon l'une quelconque des revendications précédentes.

25. Filtre selon la revendication 24, **caractérisé en ce qu'**il est doté de cellules primaires de dimensions comprises entre 200 µm et 1000 µm et de pores d'interconnexion de dimensions comprises entre 2 µm et 50 µm.
